# EUROPEAN PATENT APPLICATION

(11) **EP 2 000 449 A1**
(43) Date of publication of application: **10.12.2008**
(21) Application number: 08005798.7
(22) Date of filing: 27.03.2008
(51) Int. Cl.: C05F 17/00, C05F 17/02

(54) **Method and installation for biological drying of waste**

(30) Priority: 27.03.2007 NL 1033601
(71) Applicant: ARN BV, 6551 DZ Weurt (NL)
(72) Inventor: Drewes, Peter, 6711 JV Ede (NL); Van Gorkum, Gerardus Henricus Johannes Paulus, 6562 ML Groesbeek (NL); Rozestraten, Arnoldus Franciscus Johannes, 6533 WR Nijmegen (NL); Van Winden, Antonius Adrianus Franciscus, 6566 XP Millingen aan den Rijn (NL)
(74) Representative: Van Someren, Petronella F. H. M.

(57) **Abstract**

The invention relates to a method for biological drying of waste, in particular domestic waste, by composting the waste in a series of parallel treatment spaces for a determined number of days, wherein the waste is in a startup phase, an active phase or a cooling phase of composting in the different treatment spaces, comprising of supplying air from a treatment space, in which the waste is in the active composting phase, to a treatment space in which the waste is in the startup phase for the purpose of increasing the temperature in this startup treatment space; discharging the air after a time from a treatment space, in which the waste is in the startup phase of composting, to a treatment space in which the waste is in the active composting phase for the purpose of reducing the odour and the volatile hydrocarbons in the air; and discharging the air and the dry waste from a treatment space in which the waste is dry. The invention further relates to an installation for performing the method.

## Description

The present invention relates to a method and installation for biological drying of domestic waste.

Large quantities of domestic waste and industrial waste are produced in the Netherlands, Europe and worldwide every year. Globally, and also in Europe, this waste is for the greater part dumped at landfills. In order to limit the environmental drawbacks of and the space taken up by waste at landfills, European countries, particularly the Netherlands and Germany, have switched to separation at source and reuse of specific flows, such as for instance glass, paper, tin and kitchen and garden waste (KGW).

This does not however alter the fact that, in addition to plastic and synthetic materials, a great deal of paper, organic KGW-like material and moisture is still present in the remaining waste (residual waste) after this separation at source. This residual waste is usually incinerated integrally in waste incineration plants (so-called WIPs).

The residual waste therefore still comprises a large fraction of KGW (about 35%), other constituents (11%) and some smaller fractions (glass, ferrous material) which together, as poorly combustible fraction, form more than half the residual waste. This has resulted in many cases, for instance in many plants in Germany, the United Kingdom and some in the Netherlands, in the decision to separate the poorly combustible fraction, generally by screening. The residual waste presented is herein separated into a low-calorific (about 5.5 GJ/ton), poorly combustible passing fraction with many wet organic components, referred to as Organic Wet Fraction (OWF), and a high-calorific (about 12 GJ/ton) passing fraction with many dry, readily combustible components such as plastics, synthetic materials and paper, the so-called RDF (Refuse Derived Fuel). A ratio generally results of about 40% OWF and 60% RDF.

The advantage of this separation is that a smaller, readily combustible RDF fraction remains, for which a lower WIP capacity is required. The drawback is that a poorly combustible OWF fraction remains, which is tipped, optionally after fermenting and/or composting.

Due to the environmental drawbacks dumping of untreated OWF is prohibited in a number of countries, such as Germany. Fermenting and/or composting is then necessary. The combination of separating residual waste into OWF and RDF and fermenting and/or composting is also referred to as Mechanical Biological Treatment (MBT).

Fermenting and/or composting must result in a well-stabilized OWF such that one of the environmental drawbacks of dumping, i.e. the release of methane gas, is largely obviated. This requires prolonged composting of the OWF or of the fermentation residue. In the composting of OWF it is further necessary to aerate the material. Due to the structure of the OWF and the limitations of the available aerating techniques the aeration does not progress optimally. It is partly as a result hereof that volatile organic carbon compounds such as fatty acids, aldehydes, ketones and other hydrocarbons, usually referred to as VOC and TOC, escape during the composting, particularly at the start of the process. Volatile organic carbon (VOC) comprises the volatile carbon-containing compounds. Total organic carbon (TOC) stands for the total fraction of organic compounds.

These organic substances are harmful to the environment and must therefore be removed. In order to remove these substances from the airflow expensive and energy-demanding techniques must be applied, such as regenerative thermal post-combustion. Due to these problems with the processing of OWF, MBT is an expensive process, often resulting in a cost disadvantage relative to integral combustion in a WIP. In the case of MBT the dumping of stabilized waste can moreover still be deemed a useless application, and therefore a drawback.

The present invention therefore has for its object to provide a method and installation with which high-calorific waste can be obtained and wherein the above stated drawbacks of the traditional waste treatment processes are obviated.

In the research which resulted in the present invention it was established that, surprisingly, it is possible to biologically process waste integrally, so without preseparation into RDF and OWF, by making use of composting processes such that a high-calorific residual flow is generated. It has further been found that this integral process derived from composting, also referred to as Integral Biological Treatment (IBT), can be improved in far-reaching manner by a number of specific measures.

The invention provides for this purpose a method for biological drying of waste, in particular domestic waste, by composting the waste in a series of parallel treatment spaces for a determined number of days, wherein the waste is in a startup phase, an active phase or a cooling phase of composting in the different treatment spaces, comprising of
a) supplying air from a treatment space, in which the waste is in the active composting phase, to a treatment space in which the waste is in the startup phase for the purpose of increasing the temperature in this startup treatment space;
b) discharging the air after a time from a treatment space in which the waste is in the startup phase of composting to a treatment space in which the waste is in the active composting phase for the purpose of reducing the odour and the volatile hydrocarbons in the air; and
c) discharging the air and the dry waste from a treatment space in which the waste is dry.

In this application 'composting' is understood in the broadest sense of the word. In the narrower sense composting consists of the treatment by means of an optionally controlled fermenting process in which organic materials such as branches, leaves, kitchen waste, etc. are converted into a stable humus (compost) by micro-organisms during a fermenting process in the presence of oxygen. Substantially heat, carbon dioxide and water are released here. The heat contributes toward the evaporation of the present and released water. In this application composting is also understood to mean the treatment of a mixture of organic constituents and non-organic constituents (such as plastics and other synthetic materials, leather, aluminium foil, laminate, rubble, etc), wherein the full or partial conversion of the organic constituents present by micro-organisms produces the heat for drying the whole mixture to a greater or lesser extent.

The waste treated in this manner does not have to be subjected beforehand to a separating step but can be dried integrally. A coarse size-reducing step is however preferably applied beforehand in order to obtain a more uniform size, whereby the organic wet fraction present therein becomes more accessible to the composting micro-organisms.

The invention is not limited to biological drying of integral waste, although this is recommended, whereby residual waste no longer need be separated into 60% combustible fraction and 40% organic wet fraction. After treatment according to the invention only about 70% of the untreated waste still remains as combustible fraction. The organic wet fraction forms an integral part hereof and no longer has to be dumped.

The air supplied from an active treatment space to a startup treatment space in the method according to the invention is moist and warm and still contains sufficient oxygen, whereby the startup treatment space is brought to temperature much more rapidly and the overall production time can be considerably shorter than in the traditional processes. According to the invention it has been found that the composting process can be completed sooner when startup takes place with this moist and warm air. With the traditional installations the temperature increases more slowly and generally does not reach the level which is reached in an installation according to the invention, whereby more time is required to complete the drying process.

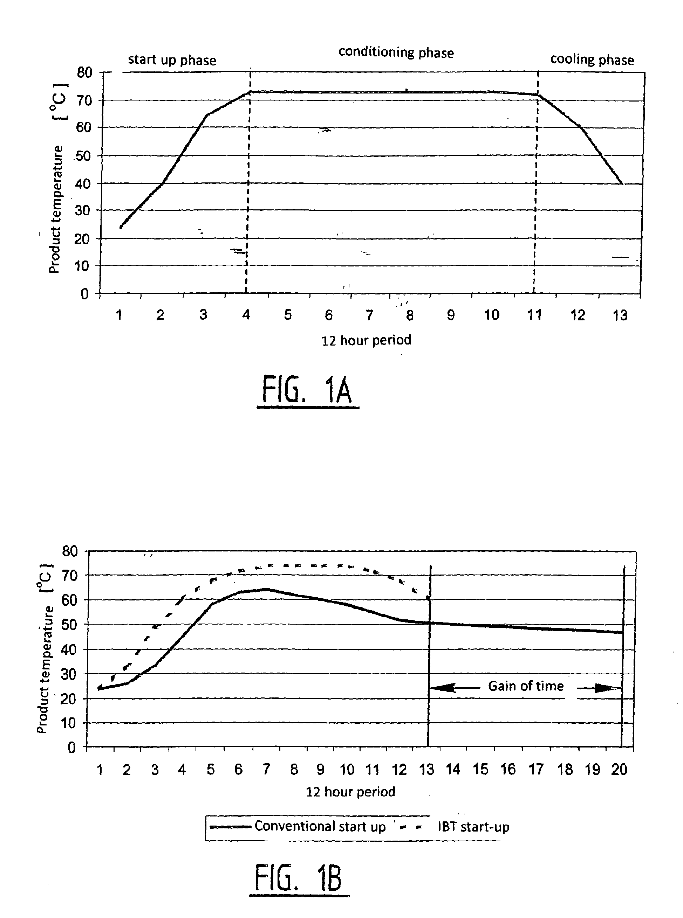

Figure 1A shows the temperature curve during the different phases of the method according to the invention.

The method according to the present invention results for instance after only 13 part-days in waste sufficiently dried to enable processing thereof in high-calorific incinerators. With the traditional methods about 20 part-days are necessary for this purpose (**Figure 1B****).**

The air in a treatment space in the startup phase of composting comprises on day 1 the highest concentration of volatile hydrocarbons (VOC). In the existing installations this heavily loaded air is discharged together with air from other treatment spaces. Although the heavily contaminated air is hereby diluted to some extent, the overall hydrocarbon content in the discharged air is still relatively high, 200 mg/m³ in the example of table 1. This air is further purified in a washer installation, although the air quality can often not be improved sufficiently herewith to enable direct emission. An additional process, known as regenerative thermal post-combustion, is therefore necessary.

In the method according to the invention this air does not immediately enter the washer or the outside air but, conversely, the active treatment spaces. Since the composting process is already well underway here, the VOC and TOC in this contaminated air are for the greater part degraded by bacteria populations already developed there. The level of harmful substances hereby decreases in the treatment spaces, where the composting proceeds on production days 2-6, from for instance 800 mg/m³, a normal value during the first 24 hours, to 28 mg/m³ and lower. **Table 1** shows the progression of the hydrocarbon content during 6 days of composting.

**Table 1**

| Progression of TOC content during 6 days of composting | | | | | | | |
|---|---|---|---|---|---|---|---|
| day number | 1 | 2 | 3 | 4 | 5 | 6 | Average to washer |
| average TOC mg/m³ | 800 | 300 | 28 | 28 | 28 | 15 | 200 |
| percentage contribution TOC | 67% | 25% | 2% | 2% | 2% | 1% | 100% |

In the method according to the invention the VOC content in the air to be discharged to the washer can decrease to for instance 28 mg/m³ or lower. The method according to the invention hereby has a two-fold advantage. Firstly, the treatment time becomes considerably shorter through the use of warm startup air and, in addition, the environmental impact of the discharged air is much smaller.

After the composting process in a determined treatment space has ended, the air can be discharged from this space to a washer for the purpose of further reducing the odour and hydrocarbons remaining therein. This preferably takes place by means of biological decomposition in for instance a biofilter. The great advantage hereof is that regenerative thermal post-combustion, which is necessary when the hydrocarbon content is still too high, can now be wholly or partially avoided. Up to 20% of the production costs can hereby be saved. The environmental advantage is that no, or less, energy (obtained by burning fossil fuels) is necessary for the post-combustion, and that the CO₂ emission of the overall process is therefore lower.

Air from the active treatment spaces has for instance an oxygen content of 19%, a relative humidity of 99% and a temperature of 45°C. Fresh outside air may optionally be added to the discharge air from the active treatment spaces in order to optimize the temperature, the humidity and/or the oxygen content herein.

The method steps of supplying warm startup air from active treatment spaces to startup treatment spaces and discharging contaminated startup air from a startup space to active spaces in order to reduce the VOC and TOC herein can also be applied in normal composting installations in which the waste is not treated integrally but in which a fraction of the waste or for instance KGW is composted or dried.

The essence of the invention lies in the reuse of air from active treatment spaces for the purpose of preheating startup air in a space where the composting is just beginning and cleaning the highly contaminated air from a startup space which has been operating for 1 to 2 days in the active spaces.

In addition, the drying process can be improved still further by aerating the waste in the treatment space alternately from above and from below. In the traditional method the waste is aerated in only one direction (usually from below). For this purpose air is blown through the waste from the floor. According to the invention it has now been found that, when the airflow in the treatment space is reversed from time to time, whereby it not only passes through the waste from bottom to top but also from top to bottom, a much more homogenous drying of the waste can be achieved.

Reversal of the airflow prevents the cooling of the air which occurs with blowing only from below and which may result in condensation. A zone with a higher moisture content is hereby created at the bottom of the treatment space. Since it is precisely drying of the waste which is being attempted, it is undesirable that the waste become moist again through condensation.

By reversing the airflow the available air is moreover mixed more intensively and for a longer time with the composting residual waste, whereby the hydrocarbon contents in the end product can be reduced even further. Furthermore, the drying efficiency increases and the drying time is shortened still further.

Nor is this technique limited to the biological drying of integral waste, but can also be applied in the already used methods or for composting or biological drying of other materials.

According to another aspect of the invention, the washing of the emission air can be further optimized by bringing it into contact in counterflow with a washing liquid after discharge, for instance from a space in which the drying process has been completed. It has been found that a rapid absorption of the gases to be removed, such as ammonia, is hereby realized and fewer odour-removing micro-organisms are flushed out of the channels.

The invention further relates to an installation for performing the method, comprising a plurality of treatment spaces for the waste, each of which is connected via closing means to shared means for supplying air to the treatment spaces and shared means for discharging air from the treatment spaces, wherein the air supply means and the air discharge means are in mutual connection, preferably via a fan.

Alternatively, the supply and discharge means can be the same means. The position of the closing means then determines at any given moment whether there is supply of air or discharge of air.

In an advantageous embodiment of the installation according to the invention the supply means take the form of a tube, here also referred to as surplus channel. Part of the air from the active treatment spaces is received herein to be supplied to a startup treatment space, here also referred to as startup tunnel.

Air is discharged from the active tunnels via the discharge means, which for instance take the form of a tube, also referred to as startup channel, and guided to the surplus channel, or contaminated startup air is guided from a startup tunnel to one or more active tunnels.

The supply and discharge means for contaminated startup air from a startup tunnel and warm and moist startup air carried from an active tunnel to a startup tunnel can take the form of different types of conduit, such as tubes, cylinders, pipes etc.

The closing means preferably take the form of actively controllable or pressure-controlled valves. The valve, which discharges contaminated air from a startup tunnel to the startup channel which is there diluted with air from active tunnels and guided to active tunnels via the surplus channel, is preferably pressure-controlled. As soon as the pressure in the startup tunnel reaches a determined value, air will be discharged. Other valves, such as valves at locations where opening or closing depends on factors not related to the pressure, will however be actively controllable.

According to the invention each treatment space preferably further comprises means for discharging air to the outside, which means are connected to the treatment space via a supply opening with interposing of closing means. In these discharge means the air usually undergoes a further treatment before the air is emitted. This further treatment comprises of wetting the air with water in order to absorb harmful substances such as ammonia therein and to optimally wet the air for the purpose of the functioning of the biofilter. In addition, air can be brought into contact with a biofilter prior to emission in order to further reduce the odour and the VOC and TOC.

According to the invention the washing and the biological treatment are advantageously combined in that the washer channel is provided with a perforated inner wall on which bacterial growth is provided. In a preferred embodiment water is sprayed into the washer channel by means of sprayers directed toward the supply opening for the air leaving the tunnel. By spraying counter to the airflow the wetting is optimal and a part of the harmful substances, such as ammonia, is already immediately absorbed, and less water is required. Flushing away of bacterial growth is further prevented.

Traditionally the water is sprayed from above into a washer channel. Water flows can hereby occur in the bottom of the channel which flush away the bacterial growth there, whereby the biological cleaning of the discharge air eventually deteriorates.

The new method of spraying water into a washer channel can also be used, independently of the other parts of the installation according to the invention, in traditional waste treatment plants which make use of washing of the discharge air prior to emission.

In the installation according to the invention each treatment space can be provided with means for supplying fresh air from outside. These means are preferably formed by a tube connected to all treatment spaces. Fresh air may be required to regulate the temperature of the startup air or to be added to the startup air for the purpose of absorbing extra moisture or dosing extra oxygen for the purpose of the composting process.

In the installation according to the invention each treatment space preferably comprises means for recirculating the air therein. Drying is enhanced by the flowing of the air.

According to the invention the installation is preferably further provided with means for reversing the flow direction of the recirculated air through the waste. It has been found that the drying efficiency hereby increases and the drying time may be shorter.

In a preferred embodiment the recirculation means are formed by an opening for respectively supplying or discharging recirculated air at the top of the treatment space and openings for respectively discharging or supplying recirculated air in the floor, wherein the opening at the top is connected to the openings in the floor via means for respectively drawing in or blowing out air.

This system of periodic reversal of airflows in a treatment space can likewise be applied in combination with other waste treatment plants, techniques and types of waste, and is not limited to the installation according to the invention.

Created during the drying is percolate liquid which is discharged via the blow and suction openings in the aerating floor. According to the invention this takes place on the rear side of the tunnels through the use of a controlled closing valve. The closing valve is opened periodically for a short time. Heretofore the discharge was positioned on the front side of the tunnels and the discharge took place via water seals to a gutter. The drawback hereof is that a considerable extra building investment is needed for this purpose. The gutters are further contaminated by accumulation of sludge, whereby odour nuisance occurs. The gutter must moreover be covered with a grating, over which the power shovels, which supply and discharge the waste, drive in and out continuously. Such gratings are considered to be an additional obstacle.

This new method of draining percolate water can also be applied in waste treatment plants other than that according to the invention.

The present invention will be further elucidated with reference to the accompanying figures, in which:
**figure 2** shows a perspective view with broken away parts of an installation according to the invention and a detail of the washer channel;
**figure 3** shows a partly cross-sectional perspective view of one of the treatment spaces with the different supply and discharge channels for air with different valve positions (**figures 3a** **and** **3b**).

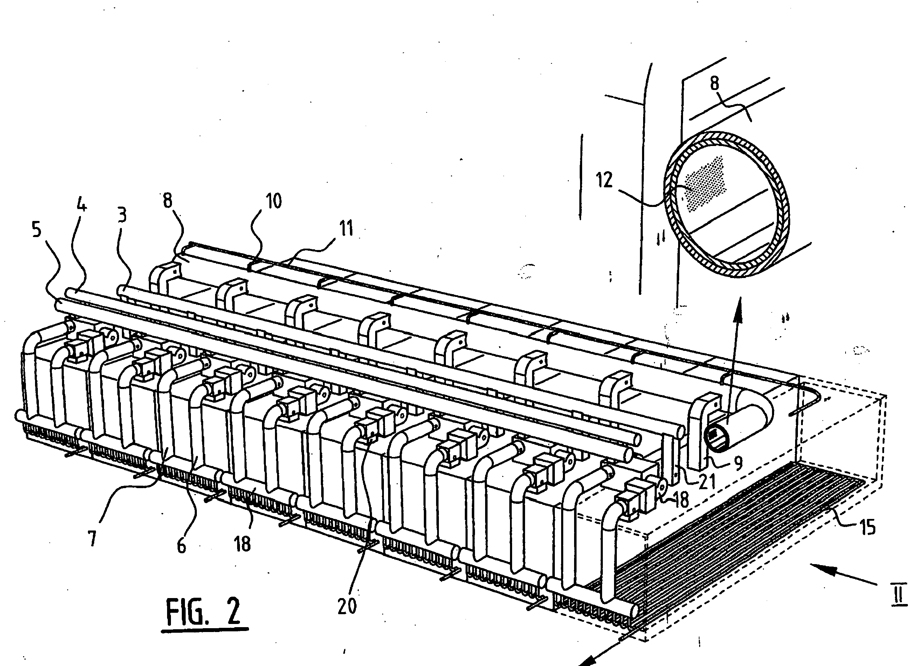

**Figure 2** shows a series of tunnels **1a** to **1h.** Of these, tunnel **1a** will be deemed a startup tunnel and tunnels **1b** to **1h** are active. Each of the tunnels is connected to the so-called startup channel **3** via a discharge channel **21.** Warm, moist air from tunnels **1b** to **1h,** in which the composting is in the active phase, is discharged via this channel and then guided to surplus channel **4**. It is fed herefrom to startup tunnel **1a.**

Each tunnel is further connected to a fresh air channel **5**. The relative humidity, the oxygen content and the temperature of the air from surplus channel **4** can hereby be adjusted. Inside a tunnel **1** the air present therein can be recirculated via channels **6** and **7**.

**Figure 2** further shows washer channel **8** which is connected to channels **1a-1h** via discharge channels **9**. Water is sprayed into the washer channel via supply pipes **10**, which are fed from a shared conduit **11**. A detail of the washer channel shows the perforated internal lining **12** on which a bacterial mass (not shown) develops.

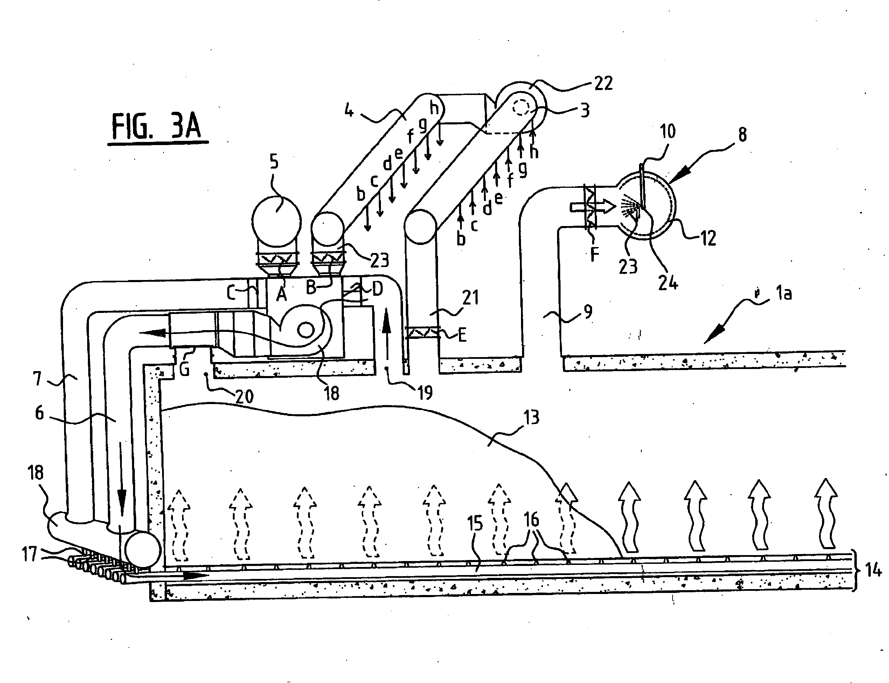

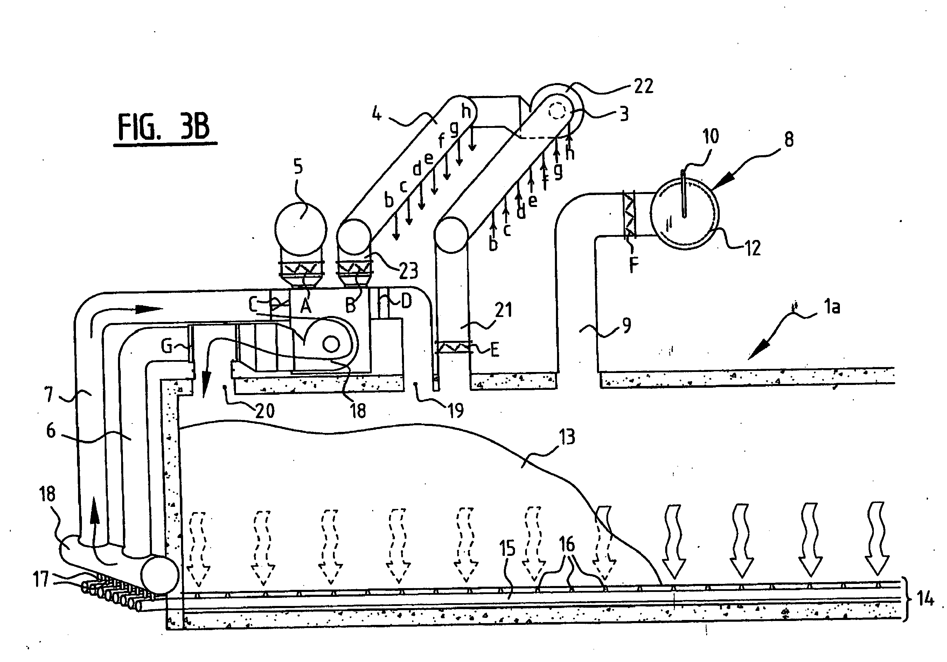

The operation of the different supply and discharge channels and the valves becomes apparent from **figures 3a** and **3b**.

**Figure 3a** shows a cross-section of tunnel **1a** with waste **13**. Tunnel **1a** is provided with an aerating floor **14**. This floor comprises a number of aerating tubes **15** located at regular mutual distances and having outflow openings **16**. The supply or discharge of air and the discharge of percolate water takes place via these openings. Percolate water is removed from the tube system via a closing valve to be opened periodically (not shown). Aerating tubes **15** are connected to conduits **17** for air. Conduits **17** debouch in a shared distribution pipe **18**, which is connected to channels **6** and **7** for recirculated air.

The recirculated air is alternately blown upward through the floor or suctioned off via the floor. Fan **18** always rotates in the same direction. The direction of the airflow is determined by the position of valves C, D and G. **Figure 3A** shows how air from channel 6 is blown through the waste heap **14** via the floor. Valve G closes discharge opening **20** and fan **18** carries air which is drawn out of tunnel **1** via channel **19** to channel **6**.

When valve G closes channel **6**, valve C is opened and valve D is closed, as in **figure 3B****,** the air is carried into tunnel **1a** via opening **20** and fed back to the tunnel through channel **7** and valve C via the floor.

Valve A in the feed from the central fresh air channel **5** comes into operation when fresh air must be supplied to a tunnel **1** in order to adjust the temperature, the humidity or the oxygen content of the tunnel air.

When a tunnel is in the startup phase, the air therein meanwhile contaminated by the VOC and TOC present in the waste will have to be discharged after a time. This takes place via valve E in channel **21**, whereby the air is received in startup channel **3**. Valves E in channels **21** (shown schematically by upward arrows) in active tunnels **1b-1h** are then for instance closed. This air is carried into surplus channel **4** via fan **22** and fed via valves B in supply channels **23** (designated with downward arrows) to active channels **1b-1h,** where the VOC and TOC can be removed. Valve B in startup tunnel **1a** is then for instance closed.

When tunnel **1a** is started up, the air therein is first recirculated for a time by means of blowing, as shown in **figure 3a****.** Valve D is then wide open and valve G closes discharge opening **20**. Valves E and B are closed and valves A and F are almost closed in order to compensate possibly occurring air pressure fluctuations. During this recirculation the oxygen content is measured. When this content falls below 12%, fresh air is supplied via valve A. Discharge of air to startup channel **3** further takes place via valve E. Valve B to surplus channel **4** and valve F to washer channel **8** are then closed.

In a subsequent phase of the startup warm air is supplied from surplus channel **4**. Excess air is discharged via startup channel **3** to the surplus channel. This air can be supplied to active tunnels **1b-1h** by opening valves B in discharge channels **23** in tunnels **1b-1h.**

In all situations the recirculated air continues to blow when valve D is open and valve G closes opening **20**, or begins to suction when valve D is closed and valve C is open, and valve G closes channel **6**. Blowing in particular will usually take place during startup.

When the waste has been sufficiently dried, the air from the relevant tunnel can be supplied to washer channel **8** via a discharge channel **9**. The discharged air is herein brought into contact with washing water **23** via an atomizer or sprayer **24** spraying in a direction opposite to the direction of flow of the discharge air. Further cleaning of the emission air takes place with a bacterial mass adhered to the perforated inner wall **12.**

The valve technique in the installation according to the invention ensures that the airflows within the system can be utilized efficiently. The drying process progresses more quickly and fully through the use of warm startup air. The emission air is much cleaner than in the existing systems due to the additional cleaning of contaminated air from a startup channel in active tunnels and the spraying of washing water counter to the airflow in the washer. A regenerative post-combustion can hereby be wholly or partially dispensed with. Only a minimal quantity of fresh air need be added. Finally, the drying time can be shortened and the drying process improved by the continuously reversing recirculation flow.

## Claims

1. Method for biological drying of waste, in particular domestic waste, by composting the waste in a series of parallel treatment spaces for a determined number of days, wherein the waste is in a startup phase, an active phase or a cooling phase of composting in the different treatment spaces, comprising of
a) supplying air from a treatment space, in which the waste is in the active composting phase, to a treatment space in which the waste is in the startup phase for the purpose of increasing the temperature in this startup treatment space;
b) discharging the air after a time from a treatment space, in which the waste is in the startup phase of composting, to a treatment space in which the waste is in the active composting phase for the purpose of reducing the odour and the volatile hydrocarbons in the air; and
c) discharging the air and the dry waste from a treatment space in which the waste is dry.

2. Method as claimed in claim 1, **characterized in that** the air is discharged to the outside.

3. Method as claimed in claim 1 or 2, **characterized in that** the air discharged from the treatment space in which the waste is dry is carried to a washer for the purpose of further reducing remaining odour and hydrocarbons in the air.

4. Method as claimed in claim 3, **characterized in that** biological degrading of remaining odour and hydrocarbons takes place in the washer before the air is discharged to the outside.

5. Method as claimed in claim 1, 2, 3 or 4, **characterized in that** fresh air is optionally added to the discharge air from the active treatment spaces in order to adjust the temperature, humidity and/or the oxygen content herein.

6. Method as claimed in any of the claims 1-5, **characterized in that** the waste in the treatment space is aerated alternately from above and from below.

7. Method as claimed in any of the claims 1-6, **characterized in that** the air from the startup treatment space is distributed over a plurality of active treatment spaces.

8. Installation for biological drying of waste, in particular domestic waste, comprising a plurality of treatment spaces (**1a-1h**) for the waste, each of which is connected via closing means to shared means for supplying air to the treatment spaces (**4**) and shared means for discharging air (**3**) from the treatment spaces, wherein the treatment spaces are in mutual connection.

9. Installation as claimed in claim 8, **characterized in that** each treatment space comprises separate means for supplying fresh air and comprises separate means for discharging air to the outside.

10. Installation as claimed in claim 8 or 9, **characterized in that** the treatment spaces are in mutual connection via a fan.

11. Installation as claimed in claim 8, 9 or 10 or the preamble of claim 8, **characterized in that** each treatment space comprises means (**8**) for discharging air to the outside, which means are connected to the treatment space via a supply opening (**9**) with interposing of closing means.

12. Installation as claimed in claim 11, **characterized in that** the means for discharging air to the outside are provided with a perforated inner wall **(12).**

13. Installation as claimed in claim 12, **characterized in that** the perforated inner wall is covered at least partially with bacteria.

14. Installation as claimed in any of the claims 8-13, **characterized in that** spray means (**24**) directed toward the supply opening are accommodated in the means for discharging air to the outside.

15. Installation as claimed in any of the claims 8-14, **characterized in that** the means for discharging air to the outside (**8**) are formed by a tube connected to all treatment spaces.

16. Installation as claimed in any of the claims 8-15, **characterized in that** each treatment space is provided with means for supplying fresh air (**5**).

17. Installation as claimed in any of the claims 8-16, **characterized in that** the means for supplying fresh air are formed by a tube connected to all treatment spaces.

18. Installation as claimed in any of the claims 8-17 or the preamble of claim 7, **characterized in that** each treatment space comprises means for recirculating the air (**6**, **7**, **19**, **20**) therein.

19. Installation as claimed in claim 18, further comprising means for reversing the flow direction of the recirculated air through the waste.

20. Installation as claimed in claims 18 and 19, **characterized in that** the recirculation means are formed by an opening for respectively supplying or discharging recirculated air (respectively **20**, **19**) at the top of the treatment space and openings (**16**) for respectively discharging or supplying recirculated air in the floor (**14**), wherein the opening at the top is connected to the openings in the floor via means for respectively drawing in or blowing out air (**18**).

21. Installation as claimed in claim 20, **characterized in that** the means for drawing in and blowing out air (**18**) are formed by a fan.

22. Method for treating waste, in particular domestic waste, for the purpose of increasing the calorific value thereof, comprising of composting the waste without prior separation into Organic Wet Fraction and Refuse Derived Fuel.
